# FASCICULE DE BREVET EUROPEEN

(11) **EP 3 025 079 B1**
(45) Date de publication et mention de la délivrance du brevet: **31.10.2018**
(21) Numéro de dépôt: 14750570.5
(22) Date de dépôt: 16.07.2014
(51) Int. Cl.: F16K 1/22, F16K 27/02, F02D 9/10, F02M 26/70

(54) **VANNE, NOTAMMENT POUR MOTEUR THERMIQUE**
VENTIL, INSBESONDERE FÜR VERBRENNUNGSMOTOR
VALVE, NOTABLY FOR COMBUSTION ENGINE

(30) Priorité: 26.07.2013 FR 1357433
(43) Date de publication de la demande: 01.06.2016
(73) Titulaire: Valeo Systèmes de Contrôle Moteur, 95800 Cergy Saint Christophe (FR)
(72) Inventeur: MARTIN, Nicolas, F-78600 Maisonslafitte (FR); HODEBOURG, Grégory, F-78500 Sartrouville (FR); CRAVO, David, F-95520 Osny (FR)
(86) Numéro de dépôt international: PCT/FR2014/051824
(87) Numéro de publication internationale: WO 2015/011372

(56) Documents cités:
- WO-A1-2012/001282
- DE-A1- 2 427 995
- DE-A1-102008 034 341
- US-A1- 2010 148 107

## Description

L'invention se rapporte à une vanne notamment pour moteur thermique.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais). La vanne peut ainsi être parcourue par des gaz d'échappement à haute température.

Dans le cas d'une vanne comprenant :
- un corps dans lequel est ménagé un conduit dans lequel transite un fluide, et
- un volet monté mobile dans le corps entre une position ouverte et une position fermée dans lequel il doit obturer le conduit en venant au contact d'un joint monté dans le conduit, des problèmes de fuite de la vanne lorsque le volet est en position fermée existent notamment dus aux températures d'utilisation de la vanne. La demande internationale WO2012/001282 A1 décrit une telle vanne.

Il existe un besoin pour bénéficier d'une vanne remédiant aux inconvénients ci-dessus.

Selon l'un de ses aspects, l'invention répond à ce besoin à l'aide d'une vanne, notamment pour moteur thermique, comprenant :
- un corps dans lequel sont ménagés : un conduit apte à être parcouru par un fluide et deux logements, chaque logement recevant un palier et étant à distance du conduit, et
- un volet monté pivotant dans le corps via les deux paliers, le volet comprenant :
   - une première partie ayant une première surface dont une portion définit une première zone de contact avec le corps lorsque le volet est en position fermée,
   - une deuxième partie ayant une deuxième surface dont une portion définit une deuxième zone de contact avec le corps lorsque le volet est en position fermée,
   la première zone et la deuxième zone appartenant à des surfaces opposées du volet et étant coplanaires selon un plan coupant les paliers,
   le volet étant configuré de manière à ce qu'un dégagement soit ménagé au moins dans une portion dudit volet disposée entre un palier et le conduit, de manière à permettre le pivotement du volet sans contacter le corps.

Chaque zone de contact du volet avec le corps lorsque le volet est en position fermée peut correspondre à un contact plan sur plan selon un unique plan d'étanchéité. Avec une telle vanne, le volet établit un contact plan sur plan avec le corps lorsqu'il est en position fermée.

La première partie et la deuxième partie du volet peuvent être assemblées selon un plan de jonction du volet. Ce plan de jonction du volet peut être confondu avec le plan d'étanchéité.

Le corps peut être réalisé, au moins au niveau du volet, en au moins deux éléments en contact l'un avec l'autre selon un plan de jonction du corps. Les surfaces du corps en contact avec le volet lorsque ce dernier est en position fermée peuvent appartenir à ce plan de jonction du corps.

Autrement dit, un seul et même plan peut être à la fois:
- le plan de jonction du volet,
- le plan d'étanchéité dans lequel le contact plan sur plan est engagé entre le volet et le corps lorsque le volet est en position fermée, et
- le plan de jonction du corps.

Le volet peut comprendre un arbre reçu dans les paliers, au moins un palier étant configuré pour permettre un déplacement radial de l'arbre dans le palier lors du passage du volet de la position ouverte à la position fermée.

La vanne peut comprendre au moins un organe de rappel fixé au corps, l'organe de rappel étant configuré pour guider ledit déplacement radial de l'arbre selon une direction prédéterminée.

En variante, la vanne peut comprendre au moins un organe d'entraînement configuré pour déplacer l'arbre de manière à ce que le volet pivote entre la position ouverte et la position fermée, l'organe d'entraînement étant configuré pour guider ledit déplacement radial de l'arbre selon une direction prédéterminée.

Le jeu dans le ou les paliers peut permettre d'éviter le coincement du volet contre la paroi du conduit lorsque le volet passe dans la position fermée sans qu'il soit nécessaire de respecter des contraintes dimensionnelles trop exigeantes entre le volet et la partie du conduit dans laquelle il se déplace tout en évitant l'augmentation des sections de fuite lorsque le volet est en position fermée.

L'organe de rappel ou l'organe d'entrainement guidant le déplacement radial de l'arbre selon une direction prédéterminée permet de s'assurer que le jeu additionnel dans les paliers est bien utilisé pour éviter l'augmentation des sections de fuite entre le volet et le corps lorsque le volet est en position fermée.

Le volet et le corps peuvent être configurés de manière à ce que l'axe de rotation du volet appartienne au plan d'étanchéité.

L'axe de rotation du volet peut appartenir au plan coupant les paliers. Ainsi le volet peut présenter un axe de rotation formant l'axe de symétrie de la surface du volet située à l'intérieur du conduit. En conséquence, lorsque le volet est en position ouverte, la pression exercée par le fluide sur le volet est sensiblement la même de part et d'autre de l'axe.

La première et la deuxième zone de contact peuvent être adjacentes. Ainsi, lorsque le volet est en position fermée, les première et deuxième zones de contact se rejoignent. Les fuites lorsque le volet est en position fermée sont ainsi réduites, étant limitées aux tolérances sur les cotes des différentes pièces composant la vanne.

Au moins une cavité peut être ménagée dans le corps et disposée entre un palier et le conduit, pour recevoir la portion du volet s'étendant entre ledit palier et le conduit.

Le volet peut délimiter, lorsqu'il est en position fermée, deux fractions distinctes du conduit et la cavité peut être reliée au conduit de telle sorte qu'elle ne communique directement qu'avec une seule desdites fractions du conduit lorsque le volet est en position fermée. En considérant le sens d'écoulement du fluide dans la vanne, le volet peut alors délimiter une première fraction du conduit en amont du volet et une deuxième fraction du conduit en aval du volet.

Ainsi, lorsque le volet est en position fermée, la première fraction est en contact avec le fluide et la deuxième fraction n'est pas en contact avec le fluide.

Une fraction du conduit communiquant via les fuites existant lorsque le volet est en position fermée avec l'autre fraction du conduit, cette autre fraction étant directement en contact avec la cavité, n'est pas elle-même directement en contact avec la cavité au sens de la présente demande.

Selon un premier mode de réalisation, l'arbre est reçu dans les paliers et s'étend continument entre ces paliers, l'arbre portant la première et la deuxième partie du volet. Selon ce premier mode de réalisation, l'arbre est distinct de la première et de la deuxième partie du volet.

L'arbre peut comprendre deux portions incurvées formant chacune le dégagement permettant le pivotement du volet sans contacter le corps, chacune desdites portions étant disposée entre un palier et le conduit.

Les portions incurvées peuvent être telles qu'à l'extérieur de ces portions incurvées, l'arbre contacte le plan d'étanchéité lorsque le volet est en position fermée.

L'arbre peut être rigidement couplé à la première et à la deuxième partie du volet au niveau de la zone le long de laquelle il contacte le plan d'étanchéité.

Ainsi, la première et la deuxième partie du volet sont rigidement fixées à l'arbre sur toute la longueur située entre les portions incurvées.

En variante, les portions incurvées peuvent être telles qu'à l'extérieur de ces portions incurvées, l'arbre contacte le plan d'étanchéité en au moins une zone dont la longueur, mesurée le long de l'arbre, est inférieure à la longueur séparant les portions incurvées. L'arbre peut ainsi ménager une ou plusieurs zones dans lesquelles il contacte le plan d'étanchéité, ces zones étant situées entre les portions incurvées. L'arbre est ainsi rigidement couplé aux première et deuxième parties du volet par au moins une zone de fixation.

Chaque dégagement peut être formé par deux coudes successifs, ménagés sur l'arbre, l'arbre formant ainsi au niveau de chaque dégagement sensiblement un « U ». Un tel dégagement permet d'avoir un arbre formé d'une seule pièce.

Selon un deuxième mode de réalisation, l'arbre peut comprendre des portions propres distinctes de la première et de la deuxième partie du volet. L'arbre comprend par exemple deux portions propres, chaque portion propre étant reçue dans un palier et s'étendant entre le palier et le dégagement correspondant, chaque portion propre étant reliée à l'une de la première et de la deuxième partie du volet, de manière à ce que l'arbre puisse s'étendre continument entre les paliers par la combinaison des portions propres et d'au moins une portion de la première ou deuxième partie du volet.

Contrairement au premier mode de réalisation, dans lequel l'arbre s'étend entre les paliers au moyen d'une pièce distincte de la première et de la deuxième partie du volet et dédiée à la fonction d'arbre, l'arbre selon le deuxième mode de réalisation peut être formé au niveau du conduit par au moins une portion de l'une de la première et de la deuxième partie du volet.

Ainsi, au moins une portion d'une partie du volet peut être utilisée à la fois pour obturer le conduit lorsque le volet est en position fermée, pour supporter le volet dans le conduit, et pour transmettre au volet un mouvement permettant son pivotement.

On réduit ainsi l'encombrement induit par le volet lorsque ce dernier est en position ouverte.

La première partie du volet peut ainsi définir l'arbre entre les deux portions propres de ce dernier.

En variante, la deuxième partie du volet peut définir l'arbre entre les deux portions propres de ce dernier.

Chaque portion propre de l'arbre peut comprendre un méplat par lequel s'effectue la liaison à la première ou à la deuxième partie du volet.

Cette liaison peut permettre d'assurer la continuité de l'arbre au niveau du conduit.

La première ou la deuxième partie du volet peut comprendre deux dégagements ne s'étendant chacun que d'un seul côté de l'axe de rotation du volet de manière à permettre le pivotement du volet, lesdits deux dégagements étant alors séparés par au moins la portion de ladite première ou deuxième partie du volet s'étendant dans le conduit.

La première ou la deuxième partie du volet peut s'étendre de part et d'autre de l'axe de rotation du volet, dans une partie de la cavité. La première ou la deuxième partie du volet peut s'étendre de part et d'autre de l'axe de rotation du volet, au moins dans une partie du conduit.

La première ou la deuxième partie du volet peut comprendre au moins une zone large et au moins deux zones étroites, les zones étroites étant situées au moins au niveau des dégagements et la zone large étant située au moins au niveau du conduit.

Chaque dégagement peut s'étendre entre le conduit et le palier.

La première ou la deuxième partie du volet peut comprendre deux portions de liaison coopérant avec la portion propre correspondante de l'arbre via le méplat, chaque portion de liaison étant disposée entre le palier et le dégagement correspondant.

Chaque portion de liaison peut être rigidement couplée avec la portion propre de l'arbre correspondante via le méplat de cette dernière.

Chaque portion de liaison peut s'étendre de part et d'autre de l'axe de rotation du volet.

En variante, chaque portion de liaison peut ne s'étendre que d'un côté de l'axe de rotation du volet.

Chaque dégagement peut comprendre un premier biseau venant en regard d'un deuxième biseau ménagé dans le corps, de manière à permettre le pivotement du volet sans contacter le corps.

Le premier biseau peut former un angle aigu avec le plan défini par les première et deuxième zones de contact du volet, par exemple inférieur strictement à 90°, notamment inférieur à 45°.

Le deuxième biseau peut former un angle aigu avec le plan d'étanchéité, par exemple inférieur strictement à 90°, notamment inférieur à 45°.

La vanne peut être disposée dans le circuit d'admission, le circuit d'échappement, ou une boucle de recirculation par laquelle transitent les gaz d'échappement réinjectés à l'admission (EGR en anglais). La vanne peut ainsi être parcourue par des gaz d'échappement à haute température.

Avantageusement, la vanne peut être placée dans une boucle de recirculation haute pression. On entend par « boucle de recirculation haute pression » une boucle qui récupère des gaz d'échappement en amont de la turbine et qui réinjecte ceux-ci en aval du compresseur.

Dans une autre variante, la vanne peut être placée dans une boucle de recirculation basse pression. On entend par « boucle de recirculation basse pression » une boucle qui récupère des gaz d'échappement en aval de la turbine et qui réinjecte ceux-ci en amont du compresseur.

L'invention pourra être mieux comprise à la lecture de la description qui va suivre d'un exemple non limitatif de mise en oeuvre de celle-ci et à l'examen du dessin annexé sur lequel :
- les figures 1 à 5 se rapportent à une vanne selon l'invention, la vanne étant représentée en position fermée, la figure 1 représentant en perspective la vanne, la figure 2 représentant en perspective la vanne de la figure 1, une partie du corps ayant été retirée pour faire apparaître certains éléments de celle-ci, la figure 3 représentant en vue de dessus la vanne des figures 1 et 2, la figure 4 représentant en coupe selon A-A, B-B, C-C, D-D et E-E la vanne des figures 1 à 3, la figure 5 représentant un détail représenté en F sur la coupe selon C-C de la figure 4,

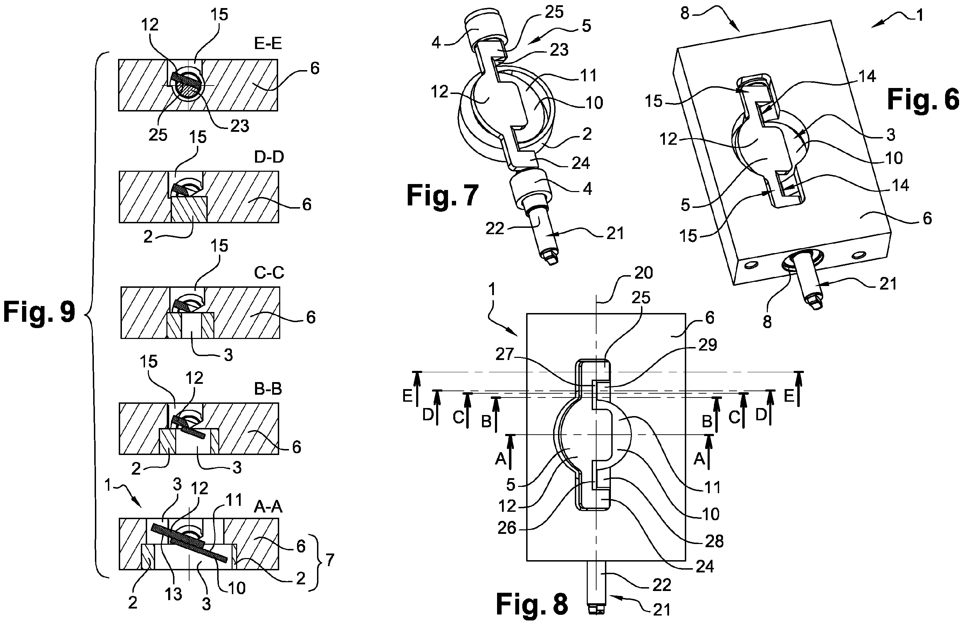

- les figures 6 à 9 se rapportent à la vanne des figures 1 à 5, respectivement selon la représentation des figures 1 à 4, la vanne étant en position dans laquelle elle a commencé son pivotement pour ouvrir le conduit, et

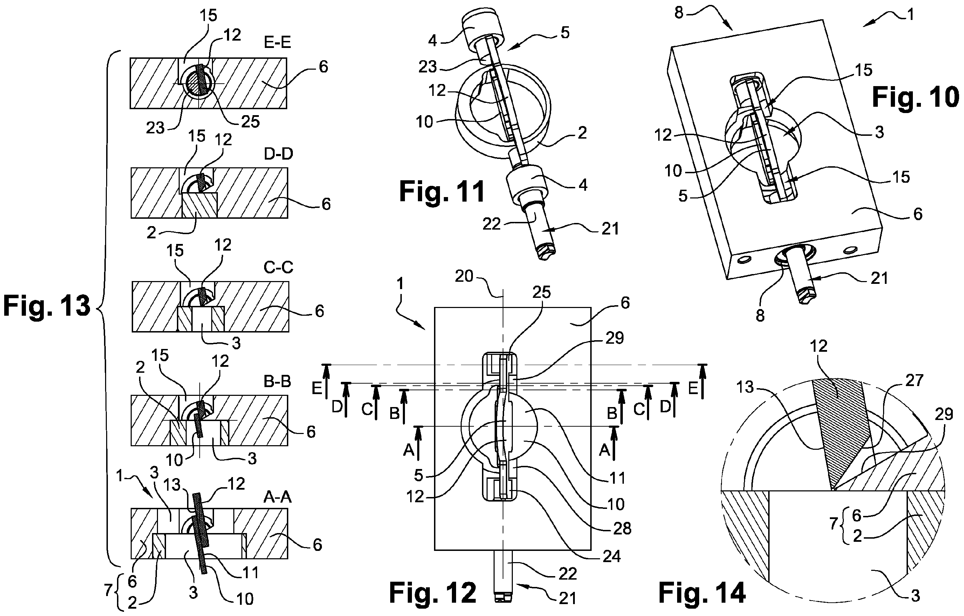

- les figures 10 à 14 se rapportent à la vanne des figures 1 à 9, respectivement selon la représentation des figures 1 à 5, la vanne étant sensiblement en position d'ouverture maximale du conduit, la figure 14 représentant un détail représenté en F sur la coupe selon C-C de la figure 13.

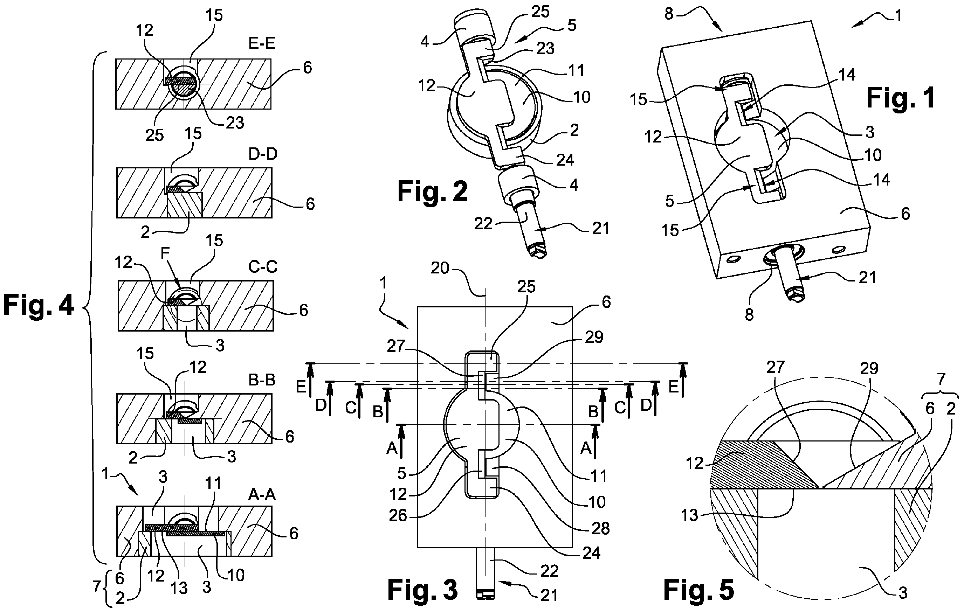

On a représenté sur les figures 1 à 3, une vanne 1 pour moteur à combustion interne. Cette vanne 1 est par exemple destinée à être montée dans une boucle de recirculation des gaz d'échappement haute pression. Dans ces conditions, la température des gaz peut atteindre 700°C.

Cette vanne 1 comprend :
- un corps 7 dans lequel sont ménagés : un conduit 3 apte à être parcouru par un fluide et deux logements 8, chaque logement recevant un palier 4 et étant à distance du conduit 3, et
- un volet 5 monté pivotant dans le corps 7 via les deux paliers 4.

Le volet 5 est ici reçu avec un jeu lui permettant un déplacement radial dans chacun des paliers 4.

Le corps 7 comprend dans cet exemple deux éléments 2 et 6 au niveau du volet 5. Ces deux éléments 2 et 6 sont assemblés selon un plan appelé « plan de jonction du corps ».

Le volet 5 comprend :
- une première partie 10 ayant une première surface 11 dont une portion définit une première zone de contact avec l'élément 6 du corps 7 lorsque le volet est en position fermée,
- une deuxième partie 12 ayant une deuxième surface 13 dont une portion définit une deuxième zone de contact avec l'élément 2 du corps 7 lorsque le volet est en position fermée.

Dans l'exemple représenté, les première 10 et deuxième 12 parties du volet 5 sont formées par deux tôles et sont obtenues par découpe et emboutissage. Ces deux parties sont soudées entre elles au laser ou sont assemblées entre elles par vissage, sertissage ou rivetage. L'assemblage entre la première 10 et la deuxième 12 partie du volet 5 peut s'effectuer selon un plan de jonction du volet. Deux surfaces planes appartenant respectivement à la première 10 et à la deuxième 12 partie du volet 5 sont alors solidarisées l'une contre l'autre.

Chacune de la première 10 et de la deuxième 12 partie se présente dans l'exemple considéré sous la forme d'une plaque, c'est-à-dire d'un parallélépipède de faible hauteur. La soudure entre les deux parties 10 et 12 s'effectue via deux faces amenées en regard.

Dans l'exemple considéré, le conduit 3 présente à hauteur des paliers 4 une section transversale sensiblement circulaire et chacune de la première 10 et de la deuxième 12 partie du volet 5 présente au niveau du conduit un contour sensiblement circulaire. La première zone et la deuxième zone appartiennent à des surfaces opposées du volet 5 et sont coplanaires selon un plan coupant les paliers 4. L'axe de rotation 20 du volet 5 appartient à ce plan coupant les paliers.

La première partie 10 du volet 5 s'étend de part et d'autre de l'axe 20 de rotation.

La deuxième partie 12 du volet 5 s'étend de part et d'autre de l'axe 20 de rotation, dans une partie du conduit 3.

La deuxième partie 12 du volet 5 comprend deux dégagements 14, chaque dégagement 14 étant ménagé dans le volet entre un palier 4 et le conduit 3, de manière à permettre le pivotement du volet sans contacter l'élément 6 du corps 7.

Deux cavités 15 sont ménagées dans l'élément 6 du corps 7. Chaque cavité 15 est disposée entre un palier 4 et le conduit 3 et permet de recevoir la portion du volet s'étendant entre le palier 4 et le conduit 3.

Dans l'exemple représenté, ces cavités sont obtenues directement par moulage sous pression de la pièce formant l'élément 6 du corps 7.

Lorsqu'il est en position fermée, le volet 5 définit deux fractions distinctes du conduit 3. Chaque fraction est située de part et d'autre du volet 5. Les deux cavités 15 s'étendent dans l'exemple considéré du même côté par rapport au plan de contact définit par le contact entre le volet 5 et le corps7 lorsque le volet est en position fermée. Les deux cavités 15 sont ainsi reliées au conduit 3 de telle sorte qu'elles ne communiquent directement qu'avec une unique fraction du conduit lorsque le volet est en position fermée.

Le volet 5 comprend un arbre 21 comprenant deux portions propres 22, 23. Chaque portion propre 22, 23 est reçue dans un palier 4 et s'étend entre le palier 4 et le dégagement 14 correspondant. Cet arbre est apte à être déplacé en rotation dans le conduit 3 par un actionneur non représenté sur les figures.

Chaque portion propre 22, 23 est reliée à la deuxième 12 partie du volet 5, de manière à ce que l'arbre 21 puisse s'étendre continument entre les paliers 4 par la combinaison des portions propres 22, 23 et de la deuxième 12 partie du volet 5.

Chaque portion propre 22, 23 de l'arbre 21 comprend un méplat par lequel s'effectue la liaison à la deuxième 12 partie du volet.

L'axe de rotation 20 du volet 5 appartient dans cet exemple au plan défini par chaque méplat.

La liaison est faite par soudure au laser, par vissage, par sertissage ou par rivetage. Cette liaison est faite par l'intermédiaire de deux portions de liaison 24, 25 ménagées sur la deuxième 12 partie du volet 5. Ces portions de liaison 24, 25 sont disposées entre le palier 4 et le dégagement 14 correspondant. Ces portions de liaison 24, 25 s'étendent de part et d'autre de l'axe 20 de rotation du volet 5.

Les deux dégagements 14 de l'exemple considéré ne s'étendent chacun que d'un seul côté de l'axe de rotation 20 du volet 5 et sont séparés par la portion de la première 10 partie du volet qui s'étend dans le conduit 3.Chaque dégagement 14 comprend un premier biseau 26, 27 venant en regard d'un deuxième biseau 28, 29 ménagé dans l'élément 6 du corps 7.Chaque premier biseau 26, 27 est plus long que le deuxième biseau 28, 29 venant en regard du premier, la longueur étant mesurée le long de l'axe de rotation 20 du volet.

On a représenté sur la figure 4, les vues en coupe selon A-A, B-B, C-C, D-D et E-E de la vanne des figures 1 à 3, les traits de coupe étant représentés sur la figure 3. Dans l'exemple représenté, le corps7 présente deux surfaces coplanaires sur lesquelles vient en contact le volet 5, par ses première 10 et deuxième 12 parties, lorsqu'il est en position fermée. Une première surface appartenant à l'élément 6 du corps 7 vient en contact plan sur plan selon une première zone de contact avec la première surface 11 de la première partie 10 du volet lorsqu'il est en position fermée et une deuxième surface appartenant à l'élément 2 du corps 7 vient en contact plan sur plan selon une deuxième zone de contact avec la deuxième surface 13 de la deuxième partie 12 du volet 5. Ces zones de contact sont dans cet exemple coplanaires, appartenant à un unique plan d'étanchéité.

Dans l'exemple considéré, le plan de jonction du corps, le plan de jonction du volet et le plan d'étanchéité entre le volet 5 et le corps 7 lorsque le volet est en position fermée forment un seul et même plan.

Les coupes selon A-A et B-B représentent le volet 5 et le corps7 au niveau du conduit 3.

Les coupes selon C-C à D-D représentent le volet 5 et le corps 7 au niveau de l'une des cavités 15 et plus particulièrement au niveau de l'un des dégagements 14 de la deuxième partie 12 du volet 5.

La coupe selon E-E représente le volet 5 et le corps 7, au niveau de l'une des cavités 15 et plus particulièrement la portion de liaison 25 du volet 5, la portion propre 23 de l'arbre 21 et le corps 6, au niveau de la portion de liaison 25.

On a représenté sur la figure 5, un détail des premier et deuxième biseaux.

Le premier biseau 27 forme un angle de 45°, avec la surface 13 de la deuxième partie 12 du volet 5. Le deuxième biseau 29 forme un angle de 35° avec la surface du corps 7 venant au contact de la première partie 10 du volet 5, lorsque le volet 5 est en position fermée.

L'invention n'est pas limitée à l'exemple qui vient d'être décrit. Dans une variante non représentée, le conduit 3 présente au niveau des paliers 4 une section rectangulaire et chacune de la première 10 et de la deuxième 12 partie du volet 5 présente au niveau du conduit 3 un contour sensiblement rectangulaire.

## Revendications

1. Vanne (1), notamment pour moteur thermique, comprenant :
- un corps (7) dans lequel sont ménagés : un conduit (3) apte à être parcouru par un fluide et deux logements (8), chaque logement (8) recevant un palier (4) et étant à distance du conduit (3), et
- un volet (5) monté pivotant dans le corps (7) via les deux paliers (4) le volet (5) comprenant :
- une première partie (10) ayant une première surface (11) dont une portion définit une première zone de contact avec le corps (7) lorsque le volet est en position fermée,
- une deuxième partie (12) ayant une deuxième surface (13) dont une portion définit une deuxième zone de contact avec le corps (7) lorsque le volet (5) est en position fermée,
la première zone et la deuxième zone appartenant à des surfaces opposées du volet (5) et étant coplanaires selon un plan coupant les paliers (4), **caractérisée en ce que** le volet (5) est configuré de manière à ce qu'un dégagement (14) soit ménagé au moins dans une portion dudit volet (5) disposée entre un palier (4) et le conduit (3), de manière à permettre le pivotement du volet (5) sans contacter le corps (7).

2. Vanne (1) selon la revendication 1, la partie du corps (7) en contact avec la première et la deuxième zone de contact, lorsque le volet (5) est en position fermée, définissant un plan d'étanchéité, et le volet (5) et le corps (7) étant configurés de manière à ce que l'axe de rotation (20) du volet (5) appartienne audit plan d'étanchéité.

3. Vanne selon la revendication 2, la première partie (10) et la deuxième partie (12) du volet (5) étant assemblées selon un plan de jonction du volet, le corps (7) étant réalisé, au moins au niveau de la volet (5), en au moins deux éléments (2, 6) en contact l'un avec l'autre selon un plan de jonction du corps et le plan d'étanchéité, le plan de jonction du corps et le plan de jonction du volet appartenant à un seul et même plan.

4. Vanne (1) selon l'une quelconque des revendications 1 à 3, au moins une cavité (15) étant aménagée dans le corps (7) et disposée entre un palier (4) et le conduit (3), pour recevoir la portion du volet (5) s'étendant entre ledit palier (4) et le conduit (3).

5. Vanne (1) selon la revendication 4, le volet (5) délimitant, lorsqu'il est en position fermée, deux fractions distinctes du conduit (3) et la cavité étant reliée au conduit (3) de telle sorte qu'elle ne communique directement qu'avec une seule des dites fractions lorsque le volet (5) est en position fermée.

6. Vanne (1) selon l'une des revendications précédentes, le volet (5) comprenant un arbre reçu dans les paliers (4) et s'étendant continument entre ces paliers (4), l'arbre portant la première (10) et la deuxième (12) partie du volet (5) et étant distinct de la première (10) et de la deuxième (12) partie du volet.

7. Vanne (1) selon la revendication 6, l'arbre comprenant deux portions incurvées formant chacune le dégagement permettant le pivotement du volet (5) sans contacter le corps (7), chacune desdites portions étant disposée entre un palier (4) et le conduit (3).

8. Vanne (1) selon l'une des revendications 1 à 5, le volet (5) comprenant un arbre (21) comprenant deux portions propres (22, 23), chaque portion propre étant reçue dans un palier (4) et s'étendant entre le palier (4) et le dégagement (14) correspondant, chaque portion propre étant reliée à l'une de la première (10) et de la deuxième (12) partie du volet, de manière à ce que l'arbre (21) puisse s'étendre continument entre les paliers (4) par la combinaison des portions propres (22, 23) et d'au moins une partie de la première (10) ou deuxième (12) partie du volet (5).

9. Vanne (1) selon la revendication 8, chaque portion propre (22, 23) de l'arbre (21) comprenant un méplat par lequel s'effectue la liaison à la première (10) ou à la deuxième (12) partie du volet.

10. Vanne (1) selon la revendication 8 ou 9, la première (10) ou la deuxième (12) partie du volet (5) comprenant deux dégagements ne s'étendant chacun que d'un seul côté de l'axe de rotation (20) du volet (5) de manière à permettre le pivotement du volet (5), lesdits deux dégagements (14) étant alors séparés par au moins la portion de ladite première (10) ou deuxième (12) partie du volet (5) s'étendant dans le conduit (3).

11. Vanne (1) selon les revendications 9 et 10, la première (10) ou la deuxième (12) partie du volet (5) comprenant deux portions de liaison (24, 25) coopérant avec la portion propre (22, 23) correspondante de l'arbre (21) via le méplat, chaque portion de liaison (24, 25) étant disposée entre le palier (4) et le dégagement (14) correspondant.

12. Vanne (1) selon la revendication 11, chaque portion de liaison (24, 25) s'étendant de part et d'autre de l'axe de rotation (20) du volet.

13. Vanne (1) selon l'une quelconque des revendications 10 à 12, chaque dégagement (14) comprenant un premier biseau (26, 27) venant en regard d'un deuxième biseau (28, 29) ménagé dans le corps (7), de manière à permettre le pivotement du volet (5) sans contacter le corps (7).

14. Vanne (1) selon la revendication 13, le premier biseau (26, 27) formant un angle aigu avec le plan défini par les première et deuxième zones de contact du volet, par exemple inférieur strictement à 90°, notamment inférieur à 45°.

15. Vanne (1) selon la revendication 14, le deuxième biseau (28, 29) formant un angle aigu avec le plan d'étanchéité, par exemple inférieur strictement à 90°, notamment inférieur à 45°.

## Patentansprüche

1. Ventil (1), insbesondere für einen Verbrennungsmotor, umfassend:
- einen Körper (7), in dem vorgesehen sind: eine Leitung (3), die geeignet ist, von einem Fluid durchströmt zu werden, und zwei Aufnahmen (8), wobei jede Aufnahme (8) ein Lager (4) aufnimmt und in einem Abstand zur Leitung (3) angeordnet ist, und
- eine Klappe (5), die schwenkbar im Körper (7) über die zwei Lager (4) montiert ist, wobei die Klappe (5) umfasst:
- einen ersten Teil (10), der eine erste Fläche (11) hat, von der ein Abschnitt eine erste Kontaktzone mit dem Körper (7) definiert, wenn die Klappe in der geschlossenen Position ist,
- einen zweiten Teil (12), der eine zweite Fläche (13) hat, von der ein Abschnitt eine zweite Kontaktzone mit dem Körper (7) definiert, wenn die Klappe (5) in der geschlossenen Position ist,
wobei die erste Zone und die zweite Zone gegenüberliegenden Flächen der Klappe (5) angehören und entlang einer Ebene, die die Lager (4) schneidet, koplanar sind, **dadurch gekennzeichnet, dass** die Klappe (5) eingerichtet ist, dass eine Ausnehmung (14) zumindest in einem abschnitt der Klappe (5), der zwischen einem Lager (4) und der Leitung (3) angeordnet ist, vorgesehen ist, um das Schwenken der Klappe (5) ohne Kontaktnahme mit dem Körper (7) zu ermöglichen.

2. Ventil (1) nach Anspruch 1, wobei der Teil des Körpers (7), der mit der ersten und der zweiten Kontaktzone in Kontakt ist, wenn die Klappe (5) in der geschlossenen Position ist, eine Dichtungsebene definiert, und wobei die Klappe (5) und der Körper (7) eingerichtet sind, dass die Drehachse (20) der Klappe (5) der Dichtungsebene angehört.

3. Ventil nach Anspruch 2, wobei der erste Teil (10) und der zweite Teil (12) der Klappe (5) entlang einer Verbindungsebene der Klappe zusammengefügt sind, wobei der Körper (7) zumindest im Bereich der Klappe (5) aus mindestens zwei Elementen (2, 6) hergestellt ist, die miteinander entlang einer Verbindungsebene des Körpers und der Dichtungsebene in Kontakt sind, wobei die Verbindungsebene des Körpers und die Verbindungsebene der Klappe einer einzigen und selben Ebene angehören.

4. Ventil (1) nach einem der Ansprüche 1 bis 3, wobei mindestens ein Hohlraum (15) in dem Körper (7) vorgesehen und zwischen einem Lager (4) und der Leitung (3) angeordnet ist, um den Abschnitt der Klappe (5) aufzunehmen, der sich zwischen dem Lager (4) und der Leitung (3) erstreckt.

5. Ventil (1) nach Anspruch 4, wobei die Klappe (5), wenn sie in der geschlossenen Position ist, zwei getrennte Bereiche der Leitung (3) begrenzt, und wobei der Hohlraum mit der Leitung (3) so verbunden ist, dass er direkt nur mit einem der Bereiche in Verbindung steht, wenn die Klappe (5) in der geschlossenen Position ist.

6. Ventil (1) nach einem der vorhergehenden Ansprüche, wobei die Klappe (5) eine Welle umfasst, die in den Lagern (4) aufgenommen ist und sich kontinuierlich zwischen diesen Lagern (4) erstreckt, wobei die Welle den ersten (10) und den zweiten (12) Teil der Klappe (5) trägt und vom ersten (10) und vom zweiten (12) Teil der Klappe getrennt ist.

7. Ventil (1) nach Anspruch 6, wobei die Welle zwei gekrümmte Abschnitte umfasst, die jeweils die Ausnehmung bilden, die das Schwenken der Klappe (5) ohne Kontaktnahme mit dem Körper (7) ermöglicht, wobei jeder der Abschnitte zwischen einem Lager (4) und der Leitung (3) angeordnet ist.

8. Ventil (1) nach einem der Ansprüche 1 bis 5, wobei die Klappe (5) eine Welle (21) umfasst, umfassend zwei eigene Abschnitte (22, 23), wobei jeder eigene Abschnitt in einem Lager (4) aufgenommen ist und sich zwischen dem Lager (4) und der entsprechenden Ausnehmung (14) erstreckt, wobei jeder eigene Abschnitt mit einem der ersten (10) und zweiten (12) Teile der Klappe verbunden ist, so dass sich die Welle (21) kontinuierlich zwischen den Lagern (4) durch die Kombination der eigenen Abschnitte (22, 23) und mindestens eines Teils der ersten (10) oder zweiten (12) Teile der Klappe (5) erstrecken kann.

9. Ventil (1) nach Anspruch 8, wobei jeder eigene Abschnitt (22, 23) der Welle (21) eine Abflachung umfasst, auf der die Verbindung mit dem ersten (10) oder dem zweiten (12) Teil der Klappe erfolgt.

10. Ventil (1) nach Anspruch 8 oder 9, wobei der erste (10) oder der zweite (12) Teil der Klappe (5) zwei Ausnehmungen umfasst, die sich jeweils nur auf einer Seite der Drehachse (20) der Klappe (5) erstrecken, um das Schwenken der Klappe (5) zu ermöglichen, wobei die zwei Ausnehmungen (14) nun mindestens durch den Abschnitt des ersten (10) oder zweiten (12) Teils der Klappe (5), die sich in der Leitung (3) erstrecken, getrennt sind.

11. Ventil (1) nach den Ansprüchen 9 und 10, wobei der erste (10) oder der zweite (12) Teil der Klappe (5) zwei Verbindungsabschnitte (24, 25) umfasst, die mit dem entsprechenden eigenen Abschnitt (22, 23) der Welle (21) über die Abflachung zusammenwirken, wobei jeder Verbindungsabschnitt (24, 25) zwischen dem Lager (4) und der entsprechenden Ausnehmung (14) angeordnet ist.

12. Ventil (1) nach Anspruch 11, wobei sich jeder Verbindungsabschnitt (24, 25) beiderseits der Drehachse (20) der Klappe erstreckt.

13. Ventil (1) nach einem der Ansprüche 10 bis 12, wobei jede Ausnehmung (14) eine erste Schräge (26, 27) gegenüber einer zweiten Schräge (28, 29), die im Körper (7) vorgesehen ist, umfasst, um das Schwenken der Klappe (5) ohne Kontaktnahme mit dem Körper (7) zu ermöglichen.

14. Ventil (1) nach Anspruch 13, wobei die erste Schräge (26, 27) einen spitzen Winkel mit der durch die erste und zweite Kontaktzone der Klappe definierten Ebene bildet, beispielsweise unbedingt kleiner als 90°, insbesondere kleiner als 45°.

15. Ventil (1) nach Anspruch 14, wobei die zweite Schräge (28, 29) einen spitzen Winkel mit der Dichtungsebene bildet, beispielsweise unbedingt kleiner als 90°, insbesondere kleiner als 45°.

## Claims

1. Valve (1), notably for a combustion engine, comprising:
- a body (7) in which there are formed: a passage (3) through which a fluid can pass and two housings (8), each housing (8) accepting a bearing (4) and being distant from the passage (3), and
- a shutter (5) pivot-mounted in the body (7) via the two bearings (4), the shutter (5) comprising:
- a first part (10) having a first surface (11) of which a portion defines a first zone of contact with the body (7) when the shutter is in the closed position,
- a second part (12) having a second surface (13) of which a portion defines a second zone of contact with the body (7) when the shutter (5) is in the closed position,
the first zone and the second zone belonging to opposite surfaces of the shutter (5) and being coplanar along a plane intersecting the bearings (4),
**characterized in that** the shutter (5) is configured in such a way that a clearance (14) is formed at least in a portion of said shutter (5) located between a bearing (4) and the passage (3), so as to allow the shutter (5) to pivot without contacting the body (7).

2. Valve (1) according to Claim 1, the part of the body (7) in contact with the first and the second zone of contact, when the shutter (5) is in the closed position, defining a sealing plane, and the shutter (5) and the body (7) being configured in such a way that the axis of rotation (20) of the shutter (5) belongs to said sealing plane.

3. Valve according to Claim 2, the first part (10) and the second part (12) of the shutter (5) being assembled along a joining plane of the shutter, the body (7) being produced, at least in the region of the shutter (5), as at least two elements (2, 6) in contact with one another along a joining plane of the body and the sealing plane, the joining plane of the body and the joining plane of the shutter belonging to one and the same plane.

4. Valve (1) according to any one of Claims 1 to 3, at least one cavity (15) being formed in the body (7) and located between a bearing (4) and the passage (3) to accept the portion of the shutter (5) that extends between said bearing (4) and the passage (3).

5. Valve (1) according to Claim 4, the shutter (5), when in the closed position, delimiting two distinct fractions of the passage (3) and the cavity being connected to the passage (3) in such a way that it communicates directly with just one of said fractions when the shutter (5) is in the closed position.

6. Valve (1) according to one of the preceding claims, the shutter (5) comprising a shaft housed in the bearings (4) and extending continuously between these bearings (4), the shaft bearing the first (10) and the second (12) part of the shutter (5) and being distinct from the first (10) and from the second (12) part of the shutter.

7. Valve (1) according to Claim 6, the shaft comprising two curved portions each one forming the clearance that allows the shutter (5) to pivot without contacting the body (7), each of said portions being located between a bearing (4) and the passage (3).

8. Valve (1) according to one of Claims 1 to 5, the shutter (5) comprising a shaft (21) comprising two dedicated portions (22, 23), each dedicated portion being housed in a bearing (4) and extending between the bearing (4) and the corresponding clearance (14), each dedicated portion being connected to one of the first (10) and second (12) parts of the shutter so that the shaft (21) can extend continuously between the bearings (4) through the combination of the dedicated portions (22, 23) and of at least one part out of the first (10) or second (12) parts of the shutter (5).

9. Valve (1) according to Claim 8, each dedicated portion (22, 23) of the shaft (21) comprising a flat via which it is connected to the first (10) or to the second (12) part of the shutter.

10. Valve (1) according to Claim 8 or 9, the first (10) or the second (12) part of the shutter (5) comprising two clearances each extending on just one side of the axis of rotation (20) of the shutter (5) so as to allow the shutter (5) to pivot, said two clearances (14) therefore being separated by at least the portion of said first (10) or second (12) part of the shutter (5) that extends in the passage (3).

11. Valve (1) according to Claims 9 and 10, the first (10) or the second (12) part of the shutter (5) comprising two connecting portions (24, 25) collaborating with the corresponding dedicated portion (22, 23) of the shaft (21) via the flat, each connecting portion (24, 25) being located between the bearing (4) and the corresponding clearance (14).

12. Valve (1) according to Claim 11, each connecting portion (24, 25) extending on each side of the axis of rotation (20) of the shutter.

13. Valve (1) according to any one of Claims 10 to 12, each clearance (14) comprising a first chamfer (26, 27) that comes to face a second chamfer (28, 29) formed in the body (7) so as to allow the shutter (5) to pivot without contacting the body (7) .

14. Valve (1) according to Claim 13, the first chamfer (26, 27) forming an acute angle with the plane defined by the first and second zones of contact of the shutter, for example strictly less than 90°, notably less than 45°.

15. Valve (1) according to Claim 14, the second chamfer (28, 29) forming an acute angle with the sealing plane, for example strictly less than 90°, notably less than 45°.
